# FASCICULE DE BREVET EUROPEEN

(11) **EP 3 099 572 B1**
(45) Date de publication et mention de la délivrance du brevet: **18.11.2020**
(21) Numéro de dépôt: 15700685.9
(22) Date de dépôt: 16.01.2015
(51) Int. Cl.: F16D 27/00

(54) **DISPOSITIF DE BLOCAGE EN ROTATION A STRUCTURE SIMPLIFIEE ET ACTIONNEUR COMPRENANT UN TEL DISPOSITIF**
ROTATIONSBLOCKIERUNGSVORRICHTUNG MIT VEREINFACHTER STRUKTUR UND AKTUATORVORRICHTUNG MIT SOLCH EINER VORRICHTUNG
ROTATION-BLOCKING DEVICE WITH SIMPLIFIED STRUCTURE, AND ACTUATOR COMPRISING SUCH A DEVICE

(30) Priorité: 27.01.2014 FR 1450639
(43) Date de publication de la demande: 07.12.2016
(73) Titulaire: Safran Electronics & Defense, 92100 Boulogne-Billancourt (FR)
(72) Inventeur: PIATON, Jérôme, F-92100 Boulogne-Billancourt (FR)
(74) Mandataire: Lavialle, Bruno François Stéphane
(86) Numéro de dépôt international: PCT/EP2015/050814
(87) Numéro de publication internationale: WO 2015/110365

(56) Documents cités:
- EP-A2- 1 865 593
- WO-A1-03/104673
- WO-A1-2012/136378
- CA-A1- 2 529 629
- CN-A- 1 259 628
- FR-A1- 2 549 598
- US-A- 2 735 029
- US-A1- 2012 145 505

## Description

La présente invention concerne un dispositif de blocage en rotation d'un élément mobile, utilisable notamment dans le domaine aéronautique pour le blocage d'un aileron ou d'un volet d'aéronef. L'invention concerne également un actionneur comprenant un tel dispositif.

Un tel dispositif de blocage en rotation comprend généralement un stator, un rotor monté pour pivoter autour d'un axe de pivotement, au moins un élément de blocage monté entre le stator et le rotor pour être mobile entre une position d'interaction avec le rotor et le stator et une position escamotée par rapport au rotor, et un moyen d'actionnement de l'élément de blocage entre ces deux positions.

Le dispositif peut être agencé de telle manière qu'il interdise la rotation du rotor quel que soit le sens de rotation. Alternativement, le dispositif peut être agencé de telle manière qu'il interdise la rotation du rotor dans un unique sens de rotation et laisse libre la rotation dans le sens opposé.

Le dispositif de ce type le plus connu est la roue libre dont l'élément de blocage est un cliquet ou un rouleau qui est rappelé en position d'interaction par un élément de rappel élastique. Le rotor est alors libre de tourner dans un des sens de rotation tandis que l'élément de blocage s'oppose à la rotation du rotor dans l'autre des sens de rotation.

Il existe également des dispositifs de blocage commandé qui comprennent un actionneur piloté permettant d'amener l'élément de blocage dans sa position escamotée pour autoriser un pivotement du rotor dans les deux sens de rotation.

L'actionneur est le plus souvent un actionneur électromagnétique à solénoïde ayant un noyau mobile agissant directement sur l'élément de blocage. Il en résulte un encombrement relativement important qui rend son implantation plus difficile dans les appareils qu'il est destiné à équiper.

Il est connu du document US-A-2735029 un moteur comportant un stator et un rotor dont est solidaire un arbre moteur. Le stator porte un enroulement actionnant un genre de cliquet ayant une position de blocage de l'arbre moteur et une position de libération de celui-ci. L'axe de l'enroulement est perpendiculaire à celui du rotor. Ce document est considéré comme l'art antérieur le plus proche et décrit les caractéristiques du préambule de la revendication 1.

En outre, on connaît du document US 2012/145505 un dispositif de blocage.

Un but de l'invention est de fournir un dispositif de blocage qui soit compact et fiable.

A cet effet, on prévoit, selon l'invention, un dispositif de blocage en rotation, comprenant un stator, un rotor monté pour pivoter autour d'un axe de pivotement, au moins un élément de blocage monté entre le stator et le rotor pour être mobile entre une position d'interaction avec le rotor et le stator et une position escamotée par rapport au rotor, et un moyen d'actionnement de l'élément de blocage entre ces deux positions. Le moyen d'actionnement comprend une bobine enroulée sur le stator et reliée à une unité de commande pour alimenter la bobine de manière à créer un champ magnétique et l'élément de blocage est en un matériau sensible au champ magnétique de telle manière qu'une alimentation de la bobine provoque un déplacement de l'élément de blocage vers l'une de ses positions.

De la sorte, l'actionnement est réalisé au moyen d'une bobine incorporée au stator. L'encombrement est alors limité. En outre, l'élément de blocage constitue lui-même un noyau mobile de l'actionneur ainsi réalisé,
ce qui permet de réduire la complexité du dispositif. De préférence, le moyen d'actionnement comprend un élément élastique de rappel de l'élément de blocage vers l'autre de ses positions.

Ainsi, lorsque la bobine n'est plus alimentée, l'élément élastique ramène automatiquement l'élément de blocage dans l'autre de ses positions. Ceci est particulièrement intéressant lorsque, pour des raisons de sécurité, l'élément de blocage doit être dans l'une ou l'autre de ses positions en cas de coupure d'alimentation.

De préférence, la bobine est agencée pour déplacer l'élément de blocage de la position d'interaction vers la position escamotée et l'élément de rappel élastique est agencé pour déplacer l'élément de blocage de la position escamotée vers la position d'interaction.

L'invention a également pour objet un actionneur rotatif comportant un tel dispositif de blocage.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique en coupe transversale d'un dispositif selon un premier mode de réalisation de l'invention,
- la figure 2 est une vue schématique partielle de ce dispositif, en coupe selon la ligne II-II de la figure 1,
- la figure 3 est une vue schématique en coupe transversale d'un dispositif selon un deuxième mode de réalisation de l'invention.

L'invention est ici décrite en application avec un actionneur d'une surface mobile de vol d'un aéronef. Cette surface mobile de vol est par exemple un volet, un élevon, un aileron ou autre.

Un tel actionneur rotatif comporte une structure fixe, un élément mobile en rotation, et un organe de motorisation entraînant en rotation l'élément mobile par rapport à la structure fixe.

L'actionneur comprend également un dispositif de blocage en rotation de manière qu'en absence d'alimentation le volet puisse reprendre sa position neutre mais ne puisse pas être sorti.

En référence aux figures, le dispositif de blocage en rotation selon l'invention comprend un stator 1 relié à la structure fixe et un rotor 2 solidaire en rotation de l'élément mobile et monté pour pivoter autour d'un axe de pivotement 3. Le rotor 2 a ici la forme d'une couronne montée pour pivoter autour du stator 1, le stator 1 et le rotor 2 étant coaxiaux l'un à l'autre.

Des éléments de blocage sont montés entre le stator 1 et le rotor 2 pour être mobiles entre une position d'interaction avec le rotor 2 et le stator 1 et une position escamotée par rapport au rotor 2. Plus précisément, en position d'interaction, les éléments de blocage s'opposent à la rotation du rotor 2 dans le sens de rotation R1 et laissent libre la rotation du rotor 2 dans le sens de rotation R2.

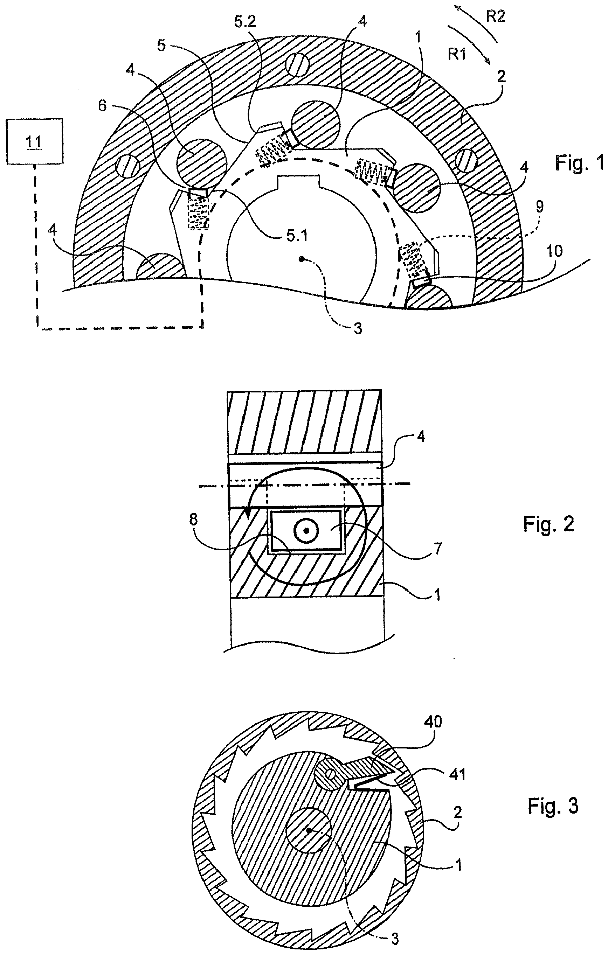

Dans le mode de réalisation des figures 1 et 2, les éléments de blocage sont des rouleaux 4 susceptibles de rouler sur des rampes 5 du stator 1. Chaque rampe 5 a une première extrémité 5.1 pourvue d'un logement 6 de réception d'un des rouleaux et une deuxième extrémité 5.2 s'étendant à une distance de l'axe de pivotement 3 supérieure à une distance séparant la première extrémité 5.1 et l'axe de pivotement 3. Ainsi, lorsque les rouleaux 4 sont dans les logements 6, ils définissent un contour de diamètre inférieur au diamètre interne du rotor 2 tandis que, lorsque les rouleaux 4 sont au voisinage des extrémités 5.2, ils définissent un contour de diamètre sensiblement égal au diamètre interne du rotor 2.

On comprend que de la sorte :
- lorsque les rouleaux 4 sont dans les logements 6, ils laissent libre la rotation du rotor 2 dans les deux sens de rotation,
- lorsque les rouleaux 4 sont en appui sur les rampes 5 au voisinage des extrémités 5.2, les éléments de blocage s'opposent à la rotation du rotor 2 dans le sens de rotation R1 (dans ce sens de rotation, les rouleaux 4 tendent à être ramenés vers la deuxième extrémité de la rampe 5 par leur frottement sur le rotor 2 et exercent en conséquence un effort de frottement croissant sur le rotor 2 jusqu'à obtenir un coincement) et laissent libre la rotation du rotor 2 dans le sens de rotation R2 (dans ce sens de rotation, les rouleaux 4 tendent à être ramenés vers la première extrémité de la rampe 5).

Le dispositif comprend également un moyen d'actionnement des rouleaux 4 entre ces deux positions.

Le moyen d'actionnement comprend une bobine 7 enroulée dans une gorge 8 ménagée circonférentiellement dans le stator 1 et reliée à une unité de commande, symbolisée en 11, pour alimenter la bobine 7 de manière à créer un champ magnétique. La gorge 8 et la bobine 7 sont donc centrées sur l'axe de pivotement 3. Les rouleaux 4 sont en un matériau sensible au champ magnétique créé par la bobine 7, lorsque celle-ci est alimentée, de telle manière qu'une alimentation de la bobine 7 provoque un déplacement des rouleaux 4 vers leur position escamotée.

Le moyen d'actionnement comprend des éléments élastiques 9 de rappel des rouleaux 4 vers leur position d'interaction. Un poussoir 10 est interposé entre chaque élément élastique 9 et le rouleau 4 associé.

Ainsi, en l'absence d'alimentation de la bobine 7, les rouleaux 4 sont maintenus dans leur position d'interaction interdisant une rotation du rotor 2 dans le sens R1 et laissant libre la rotation selon le sens R2.

Lorsque la bobine 7 est alimentée, les rouleaux 4 sont maintenus dans leur position escamotée autorisant une rotation du rotor 2 dans le sens R1 et dans le sens R2. La bobine 7 et l'unité de commande 11 doivent donc être dimensionnées pour que la bobine 7 exerce un effort supérieur à celui de l'élément élastique 9.

Bien entendu, l'invention n'est pas limitée aux modes de réalisation décrits mais englobe toute variante entrant dans le champ de l'invention telle que définie par les revendications.

En particulier, le nombre et le type d'éléments de blocage peuvent-être différents de ceux décrits.

Ainsi dans le deuxième mode de réalisation de la figure 3, le dispositif comprend un seul élément de blocage sous la forme d'un cliquet 40 qui est monté pour pivoter sur le stator 1 entre la position escamotée et la position d'interaction et le rotor 2 est agencé pour former une roue à rochet. Le cliquet 40 est comme précédemment rappelé en position escamotée par un élément élastique 41 et amené dans sa position d'interaction par la bobine 7 alimentée.

En variante également, le rotor peut être monté pour pivoter dans le stator.

L'élément élastique de rappel est facultatif et peut être omis ou remplacé par un autre type d'élément de rappel.

## Revendications

1. Dispositif de blocage en rotation, comprenant un stator (1), un rotor (2) monté pour pivoter autour d'un axe de pivotement (3), au moins un élément de blocage (4, 40) monté entre le stator (1) et le rotor (2) pour être mobile entre une position d'interaction avec le rotor (2) et le stator (1) et une position escamotée par rapport au rotor, et un moyen d'actionnement de l'élément de blocage entre ces deux positions, **caractérisé en ce que** le moyen d'actionnement comprend une bobine (7) qui est enroulée sur le stator (1) autour d'un axe coaxial au rotor (2) et qui est reliée à une unité de commande (11) pour alimenter la bobine de manière à créer un champ magnétique et **en ce que** l'élément de blocage (4, 40) est en un matériau sensible au champ magnétique de telle manière qu'une alimentation de la bobine (7) provoque un déplacement de l'élément de blocage vers l'une de ses positions.

2. Dispositif selon la revendication 1, dans lequel le moyen d'actionnement comprend un élément élastique (9, 41) de rappel de l'élément de blocage (4, 40) vers l'autre de ses positions.

3. Dispositif selon la revendication 2, dans lequel la bobine (7) est agencée pour déplacer l'élément de blocage (4, 40) de la position escamotée vers la position d'interaction et l'élément de rappel élastique (9) est agencée pour déplacer l'élément de blocage (4, 40) de la position d'interaction vers la position escamotée.

4. Dispositif selon la revendication 1, dans lequel l'élément de blocage est un rouleau (4) en appui sur une rampe (5) du stator (1).

5. Dispositif selon la revendication 1, dans lequel l'élément de blocage est un cliquet (40) qui est monté pour pivoter sur le stator (1) entre la position escamotée et la position d'interaction et le rotor (2) est agencé pour former une roue à rochet.

6. Dispositif selon la revendication 1, dans lequel le rotor (2) est monté pour pivoter autour du stator (1).

7. Actionneur rotatif comportant une structure fixe formant stator (1), un élément mobile en rotation formant rotor (2), et un dispositif de blocage en rotation selon l'une quelconque des revendications précédentes.

## Patentansprüche

1. Vorrichtung zur Drehblockierung, umfassend einen Stator (1), einen Rotor (2), der drehbar um eine Drehachse (3) angeordnet ist, mindestens ein Blockierelement (4, 40), das zwischen dem Stator (1) und dem Rotor (2) gelagert ist, um zwischen einer Interaktionsposition zur Interaktion mit dem Rotor (2) und dem Stator (1) und einer in Bezug auf den Rotor eingezogenen Position beweglich zu sein, und Betätigungsmittel zum Betätigen des Blockierelements zwischen diesen beiden Positionen, **dadurch gekennzeichnet, dass** die Betätigungsmittel eine Spule (7) umfassen, die auf den Stator (1) um eine zum Rotor (2) koaxiale Achse gewickelt ist und die mit einer Steuereinheit (11) verbunden ist, um die Spule derart zu speisen, dass ein Magnetfeld erzeugt wird, und dass das Blockierelement (4, 40) aus einem magnetfeldempfindlichen Material ist, derart, dass eine Stromversorgung der Spule (7) eine Bewegung des Blockierelements in eine seiner Positionen verursacht.

2. Vorrichtung nach Anspruch 1, bei der die Betätigungsmittel ein elastisches Rückstellelement (9, 41) zum elastischen Rückstellen des Blockierelements (4, 40) in die andere seiner Positionen umfassen.

3. Vorrichtung nach Anspruch 2, bei der die Spule (7) so ausgebildet ist, dass sie das Blockierelement (4, 40) von der eingezogenen Position in die Interaktionsposition bewegt, und das elastische Rückstellelement (9) so ausgebildet ist, dass es das Blockierelement (4, 40) von der Interaktionsposition in die eingezogene Position bewegt.

4. Vorrichtung nach Anspruch 1, bei der das Blockierelement eine Rolle (4) in Anlage an einer Rampe (5) des Stators (1) ist.

5. Vorrichtung nach Anspruch 1, bei der das Blockierelement eine Sperrklinke (40) ist, die an dem Stator (1) verschwenkbar zwischen der eingezogenen Position und der Interaktionsposition gelagert ist, und der Rotor (2) so ausgebildet ist, dass er ein Sperrrad bildet.

6. Vorrichtung nach Anspruch 1, bei der der Rotor (2) drehbar um den Stator (1) gelagert ist.

7. Drehaktor, umfassend eine ortsfeste Struktur, die einen Stator (1) bildet, ein drehbewegliches Element, das einen Rotor (2) bildet, und eine Vorrichtung zur Drehblockierung nach einem der vorhergehenden Ansprüche.

## Claims

1. A rotation-blocking device comprising a stator (1), a rotor (2) mounted to pivot about a pivot axis (3), at least one blocking element (4, 40) mounted between the stator (1) and the rotor (2) to be movable between a position of interaction with the rotor (2) and the stator (1) and a position retracted relative to the rotor, and actuator means for actuating the blocking element between these two positions, the device being **characterized in that** the actuator means comprise a coil (7) that is wound on the stator (1) around an axis coaxial with the rotor (2) and that is connected to a control unit for powering the coil in such a manner as to create a magnetic field, and **in that** the blocking element (4, 40) is made of material that is sensitive to the magnetic field in such a manner that powering the coil (7) causes the blocking element to move towards one of its positions.

2. A device according to claim 1, wherein the actuator means comprise a resilient return element (9, 41) for returning the blocking element (4, 40) towards the other one of its positions.

3. A device according to claim 2, wherein the coil (7) is arranged to move the blocking element (4, 40) from the retracted position to the interaction position, and the resilient return element (9) is arranged to move the blocking element (4, 40) from the interaction position to the retracted position.

4. A device according to claim 1, wherein the blocking element is a roller (4) bearing against a ramp (5) of the stator (1).

5. A device according to claim 1, wherein the blocking element is a pawl (40) pivotally mounted on the stator (1) to pivot between the retracted position and the interaction position, and the rotor (2) is arranged to form a ratchet wheel.

6. A device according to claim 1, wherein the rotor (2) is mounted to pivot about the stator (1).

7. A rotary actuator including a stationary stator-forming structure (1), a rotor-forming element (2) that is movable in rotation, and a rotation-blocking device according to any preceding claim.
